# EUROPEAN PATENT SPECIFICATION

(11) **EP 0 509 576 B1**
(45) Date of publication and mention of the grant of the patent: **28.01.1998**
(21) Application number: 92200930.3
(22) Date of filing: 01.04.1992
(51) Int. Cl.: H04N 5/92, H04N 7/30, G11B 5/86

(54) **Method and apparatus for determining a quantizing factor for processes involving multiple compression/decompression of data**
Verfahren und Anordnung zur Bestimmung eines Quantisierungsfaktors für Prozesse mit Datenkomprimierung und -dekomprimierung
Méthode et appareil de détermination d'un facteur de quantification pour des procédés de compression/décompression multiple des données

(30) Priority: 18.04.1991 US 688923
(43) Date of publication of application: 21.10.1992
(73) Proprietor: AMPEX SYSTEMS CORPORATION, Redwood City, California 94063-3199 (US)
(72) Inventor: Watney, John P., Los Altos, California 94025 (US)
(74) Representative: Horton, Andrew Robert Grant

(56) References cited:
- DE-A- 3 509 777
- PATENT ABSTRACTS OF JAPAN vol. 13, no. 435 (E-825)28 September 1989; & JP-A-1 162 080 ( SONY )
- PATENT ABSTRACTS OF JAPAN vol. 15, no. 148 (E-1056)15 April 1991; & JP-A-3 024 886 ( NIPPON TELEGRAPH & TELEPHONE )
- PATENT ABSTRACTS OF JAPAN vol. 14, no. 554 (P-1140)10 December 1990; & JP-A-2 236 791 ( NEC )
- PATENT ABSTRACTS OF JAPAN vol. 15, no. 220 (P-1211)5 June 1991; & JP-A-3 063 722 ( SONY ) 19 March 1991
- PATENT ABSTRACTS OF JAPAN vol. 15, no. 157 (E-1058)19 April 1991; & JP-A-3 029 582 ( MATSUSHITA ELECTRIC ) 7 February 1991

## Description

### BACKGROUND OF THE INVENTION

The invention relates to data compression processes and particularly to a method for determining preferred quantizing factors which limit degradation in image quality generated during multi-generation compression and decompression cycles to substantially the degradation incurred in the first generation. The method also concerns supplying an optimal rounding algorithm and estimating the quantizing factors applied in a previous generation if they are not explicitly available.

Typical television broadcast and post production equipment and processes have used digital technology to take advantage of the power and flexibility inherent in the digital format. The advantages in using the digital format are particularly evident when applied to the manipulation of images in, for example, post production processes during which the information content of the images may be increased, decreased and/or rearranged such as is done in the process commonly known as "layering". In such processes, the storage and manipulation of television images using digital technology was first performed with random access disc recorders. The utility of the digital disc recorders was not so much in their random access capability, as it was in their ability to re-record images for multiple generations without the loss of fidelity caused, for example, when recording multiple generations with analog recorders.

By way of explanation of the terms "multiple generations" or "multi-generations" as employed in the description herein, each sequence of recording and playing back of a video image signal results in the reproduction of a copy that is a "generation" removed from the original or preceding video image signal. Thus, "multi-generations" defines a sequence of selected repetitions of an image signal through a given signal process such as, for example, consecutive recorded tape reproductions, post production editing or layering processes, etc. In practice, some deterioration of the video image signal occurs during the record and reproduce processes because of imperfections in the record and reproduce equipment. This deterioration is manifested in the reproduced video images as signal amplitude, frequency and/or phase errors. The extent of deterioration is cumulative and thus increases markedly as the number of record and playback sequences, that is, "generations" experienced by the video image signal increases. Even in the absence of layering, a few record/playback sequences of an analog video image through imperfect or misadjusted equipment, such as may occur during electronic editing processes, produce severe deterioration in the final generation of the video image signal obtained.

It is well known that the size and cost of any present or future digital recorder is directly related to its data rate and storage capacity. Accordingly, there are increasing numbers of applications in which there is a strong incentive to reduce these requirements as, for example, by using some form of data compression. This is particularly true for digital video tape recorders, disc recorders and other high density television and data recorders. Various configurations of these recorders commonly are used in television post production processes, where 10 to 20 generations of, for example, video image data are common and more than 50 generations are occasional requirements. To be acceptable, a compression algorithm used in these recorders must meet the same multi-generation requirements as are imposed on D-1 component and D-2 composite color video tape recording standards, that is, a 4.5 image rating on the CCIR 600 five point scale.

In the event that image data is compressed before being recorded by a digital disc or an analog or digital tape recorder, it is well known that the process experiences an inherent initial quantization error which is generally a one time error occurrence. In the absence of uncorrectable recorder errors, initial quantization errors generally do not get worse with subsequent multiple generations of compression and decompression. This is only true, however, if there is no additional processing of the television image between the generations. Image processing such as the process of image "layering" mentioned above, wherein additional image data are superimposed on, or undesired image data are removed from, an existing video image, introduces quantization roundoff errors, otherwise known as rounding errors. The rounding errors are the inherent distortion introduced into the signal by the quantization process, wherein a range of values is divided into a finite number of smaller sub-ranges, each of which is represented by an assigned or "quantized" value within the sub-range. The introduction of rounding errors in subsequent generations after the first generation, will degrade the signal-to-noise ratio in some way with each generation. Fortunately it is extremely rare for any one area of an image to be processed more than a few times even if it is re-recorded very many times.

In the case of compression and decompression cycles an additional requirement is that the compression ratio, that is, the quantizing factor, is constant for each area of the image, for each generation. In order to achieve some worthwhile compression ratio, most compression algorithms do not compress all areas of the image to the same degree. Busy areas in the picture produce more data than quiet areas and thus a coarser quantizing factor generally is applied to the data in busy areas. Accordingly, in typical data compression processes, the average compression parameters are selected and/or adjusted to provide the desired total recorded data per image. That is, in video image compression applications it generally is desirable to compress video images to a particular data block size (in bits) or average data rate (in bits per second). The quantizing factor, other parameters being constant, is chosen to yield the desired compressed data block size or average data rate that will just fit the data into a desired data block length, and/or into an allotted recording space on the disc or tape. To this end, some compression algorithms adjust their parameters dynamically from block to block of data. Others adjust a single set of parameters each generation for use over a relatively large area of the image, up to the entire image.

It has been determined that if the same image is compressed and decompressed many generations, it will not suffer any substantial degradation beyond the first generation, particularly if the same quantizing factor is used for each area. However, if the image is changed in some way between generations, that is, if an image layering process is performed, and the usual different optimum quantizing factors which precisely fit the compressed data into the allotted space are used to achieve the same compression in each generation, the complexities of the conditions can lead to a rapid degradation in image quality. In addition, the normal rounding technique of adding a constant 0.5 and truncating the fractional part, accelerates the degradation.

It follows that it would be highly desirable to provide a compression/decompression technique for accomplishing multiple generation image layering without degrading image quality, wherein each generation introduces an increased or decreased layer of data over a portion of the existing image whereby the layer is more or less complex than the portion of the image it replaces. Such multiple layering processing results in slightly more, or slightly less, compression being required with each generation. The technique should compensate for the increase or decrease in compression required, while still maintaining the optimal image fidelity throughout the successive generations after the first.

The present invention overcomes the shortcomings of typical prior art, by providing techniques and associated embodiments for compressing and decompressing images through multiple generations while limiting the image degradation to little more than that which inherently is suffered in the first generation of compression. That is, the invention technique provides for changing quantization in multiple generations of quantization in which the image complexity may be varied, such that the errors after the final quantization generation are approximately the same as the errors generated in the first quantization.

In the preferred embodiments, the invention provides for the selection of an "over-quantizing" factor, a finite "non-degenerative set of quantizing" factors, and/or a "dither rounding" algorithm, which minimize degradation in image quality typically incurred as a result of performing a data layering process during multi-generation compression and decompression cycles.

According to one aspect the invention provides a method of reproducing a data signal which digitally represents an image, the method comprising producing a multiplicity of generations of the data signal, each generation including a process of quantization of the data signal, so as to compress the image data to within a given constraint, and a process of de-quantization and thereby decompression, the method also including altering the complexity of the image data between selected generations by the replacement of a portion of the image data, the image being subject to degradation owing to the production of quantization noise; wherein at least some of the quantization factors for the processes of quantization provide more compression than that due to an optimum factor which would fit the data signal when compressed exactly into the said constraint and are selected and related to reduce substantially the quantization noise produced in the generations after the first relative to the noise which would be produced by the use of such an optimum quantization factor in those generations.

According to another aspect the invention provides a method of reproducing a data signal, comprising producing a multiplicity of generations of the data signal, each generation including a process of quantization of the data signal, so as to compress the data signal to within a given constraint, and a process of de-quantization and thereby decompression, the method also including altering the complexity of the data signal between selected generations by the replacement of a portion of the data signal, the data signal being subject to degradation owing to the production of quantization noise; wherein the quantization factor for the process of quantization in the first generation is selected to provide substantial over-compression of the data signal relative to an optimum quantization factor which would provide just sufficient compression to fit the data signal within the given constraint, and the quantization factors for subsequent generations are either the same as the first quantization factor or are modified therefrom to accommodate a change in complexity of the data signal, whereby the degradation due to quantization is substantially reduced relative to that which would be produced by the use of an optimum quantization factor in those generations.

According to another aspect the invention provides a method of reproducing a data signal, comprising producing a multiplicity of generations of the data signal, each generation including a process of quantization of the data signal, so as to compress the data signal to within a given constraint, and a process of de-quantization and thereby decompression, the method also including altering the complexity of the data signal between selected generations by the replacement of a portion of the data signal, the data being subject to degradation owing to the production of quantization noise; wherein quantization factors for the processes of quantization are selected only from a pre-defined finite non-degenerative set of factors and the selected factors or close approximations thereof are employed in the various quantization processes, the non-degenerate set being such that reconstruction values in a relatively coarse quantization are a sub-set of reconstruction values in a relatively fine quantization in a different generation, whereby to reduce in generations after the first the production of quantization noise arising from requantization of data which has been quantized in a previous generation.

More particularly, in a basic concept of the invention technique, a trial quantizing factor first is selected by experience as a mid-range value for an image of average information complexity. After additional iterations if necessary, in which the trial quantizing factor is refined, an over-quantizing factor is chosen whose value is large enough to compress the image to a greater extent than that required in the first generation. That is, the over-quantizing factor is sufficiently large enough that sufficient compression still is provided in subsequent generations even though the same over-quantizing factor is used, while the complexity of the image is being increased by layering processes during the multiple generations. More particularly, the over-compression selected, for example, in the first generation, is a function of the expected cumulative increase in image complexity by any successive layering operations performed during subsequent generations. It follows that the quantizing factor need not be changed in subsequent generations even though there is an increase in image complexity, due to the fact that a larger over-quantizing factor was selected for the first generation than would be required for ideal quantization if only a single generation were performed.

If for some reason the complexity of the image due to layering increases faster than expected, whereby the number of bits or the data rate of the compressed image becomes unacceptable, it becomes necessary to increase the quantizing factor in order to fit the image into the available space. Also, it may be necessary to decrease the quantizing factor in the event that the image complexity decreases by a significant amount. If such a change in the quantizing factor is unavoidable, the invention technique includes an optimal rounding algorithm, or "dither rounding" technique where, instead of adding a constant 0.5 before truncating in the rounding process as is commonly done at present in compression processes, random numbers with, for example, a generally uniformly distributed energy spectrum in the range 0...1.0, are selectively added as determined by a threshold. In this way, any image degrading rounding sequences are broken up, although at the expense of additional random errors. However, the distribution of the random numbers may be selected to minimize the visibility of the errors.

In a preferred embodiment of the invention, the quantizing factor may be selected from the predefined finite non-degenerative set of quantizing factors of previous mention. A trial quantizing factor first is estimated and, via additional iterations if necessary, a quantizing factor of the non-degenerative set which comfortably fits the compressed data into the allotted data block length and/or recording space, then is selected for the first generation. In subsequent generations of compression/decompression with layering of additional image data, different respective quantizing factors of the non-degenerative set, each of which readily fits the compressed data into the allotted block length and/or recording space, maybe selected with no additional degradation in the image quality in the subsequent generations. By way of example, a finite non-degenerative set of quantizing factors are provided in the form of "arrays" of a periodic series of individual quantizing values, herein termed "quantizer values", wherein a special numerical relationship is maintained between corresponding quantizer values in different arrays. It has been found that the preferred numerical relationship between corresponding quantizer values of the non-degenerative set of quantizing factors is a ratio of the order of three, although other numerical relationships are possible. For example, for a linear non-degenerative set of quantizing factors the preferred numerical relationship is the ratio of the order of three. However, a non-linear non-degenerative set of quantizing factors does not require a ratio of three but still must meet other criteria imposed on the non-degenerative technique, as described herein. Further, it is to be understood that although the ratio of three is preferred, any number in a given range centered about three is equally well suited. For example, a ratio of 3.005, 3.01 or 3.1, or of 2.995, 2.99 or 2.9, etc. may be used with only correspondingly slightly increased degradation in picture quality.

In the example described herein, a quantizing factor is fully described by an 8x8 array of individual quantizer values which, in the compression process, are applied to an 8x8 array of discrete cosine transform coefficients. The coefficients, in turn, represent an 8x8 group of pixels taken from the video image. By way of example only, the transform coefficients are depicted herein as comprising 12 bit digital samples generated by a transform process from respective 8 bit samples of the video image.

A further feature of the invention includes estimating a quantizing factor applied in a previous generation of image recording, where this information is not available explicitly. The latter feature consists of finding the separation between peaks and/or valleys in a histogram, wherein the amplitudes of the peaks and/or valleys represent the number of counts of the respective values of frequency coefficients to be quantized. The separation between peaks is the reciprocal of the desired multiplicative quantizer if a quantizer of less than 1 is used, and is equal to the dividing quantizer if a quantizer of greater than 1 is used.

In the example herein, quantization is applied to frequency coefficients after taking a discrete cosine transform (DCT), but the technique is applicable to many other compression algorithms using other transformations which at some stage involve quantization.

### BRIEF DESCRIPTION OF THE DRAWINGS

FIG. 1 is a functional block diagram illustrating a data record/playback process in which compression/decompression processes also are performed, wherein the entire cycle of compression, recording, playback and decompression constitutes one generation of a multi-generation process as discussed herein relative to the invention.

FIG. 2 is a block diagram of a data compression and decompression system illustrating an environment in which the present invention is used.

FIG. 3 is a block diagram showing in further detail the Q estimator circuits of the system of FIG. 2.

FIG. 4 is a graph illustrating a histogram of the measured outputs of the first five AC coefficients generated in a computer simulation of a data compression process used to compress a boat scene.

FIG. 5 is a block diagram illustrating an alternative embodiment of the previous Q estimator circuit of FIG. 3.

FIG. 6 is a functional block diagram illustrating a prior art rounding technique used to hide contours when performing data quantization.

FIGs. 7 and 8 are functional block diagrams illustrating dither rounding and recovery for compression and decompression processes, respectively, in accordance with the invention.

FIG. 9 is a graph qualitatively comparing RMS errors generated during multi-generation data compression processes when using prior art techniques and when using the invention techniques described herein.

### DESCRIPTION OF THE PREFERRED EMBODIMENTS

In a data processing operation such as data compression, quantizing conventionally is performed by effectively multiplying each coefficient by a quantizer which is less than 1, (or by effectively dividing each coefficient by a quantizer which is greater than 1), then rounding the result by the addition of 0.5 and truncating the fractional part of the summation. It has been determined experimentally that if the complexity of the data being processed is increased or decreased during multiple generations, and if the quantizer is changed from generation to generation, the resulting errors due to rounding and truncation grow at an unacceptably large rate. Accordingly, the invention proposes limiting the choice of quantizing factors to (1) an over-quantizing value which then is used through all subsequent generations, and (2) quantizer values selected from a non-degenerative set of quantizing factors, wherein linear values therein have a preselected numerical relationship between corresponding values in different arrays, e.g., of the order of three. In the event the first mentioned over-quantizing technique is applied in generations succeeding the first, and the previous quantizing factor is not available explicitly, the invention estimates the previous quantizing factor from histograms of unquantized transform coefficients. In a further embodiment, in the event an over-quantizing factor must be changed in a subsequent generation, the invention employs a dither rounding algorithm which minimizes the growth of the roundoff errors due to quantization in the corresponding subsequent generation.

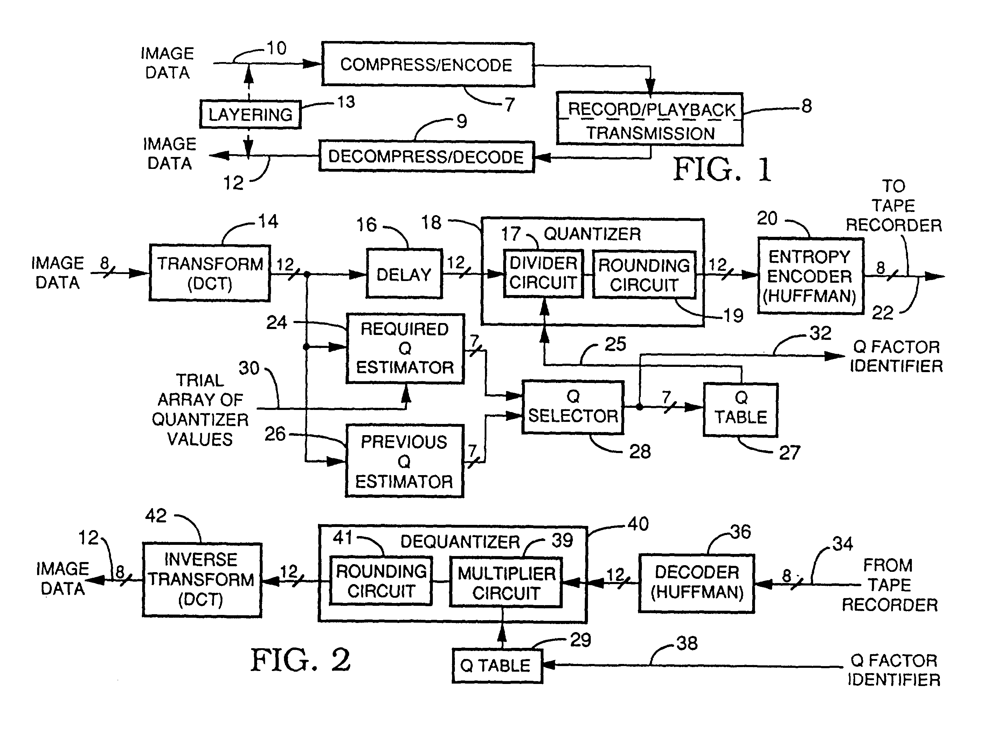

FIG. 1 illustrates in functional block diagram a complete "generation" of a record/playback process using the further processes of data compression and decompression, in which the invention techniques are employed to circumvent problems generated when performing data "layering" during multiple generations of the recording/playback processes. As previously mentioned, layering is a process whereby additional image data is added to (or removed from) an existing image during consecutive recording and playback cycles, and which accordingly increases or decreases image complexity. Thus, in FIG. 1 image data corresponding, for example, to a video image, are applied via an input bus 10 to a means 7 for compressing and encoding the data, whereupon the compressed/encoded data are supplied in a suitable format to data recorder/playback apparatus, or to a transmission channel or other utilization apparatus, as depicted via the block 8. The resulting compressed image data subsequently may be supplied to means 9 for decoding and decompressing the data, whereupon the decompressed image data corresponding to the original video image are provided on an output bus 12 to complete a "generation" of data processing. The image data on output bus 12 may be applied to a layering means 13, whose output subsequently may be applied to the input bus 10 to form a generation loop which includes a layering process.

As maybe seen, the apparatus loop of FIG. 1 illustrates one record/playback generation commonly performed by a video tape recorder or other recording apparatus. The loop also depicts the processes of compressing/encoding and the inverse processes of decoding/decompressing the data, as well as the process of layering of data on the original image, as an integral part of the complete generation. It follows that the passage of additional cycles of the same data through the apparatus loop of FIG. 1 such as employed, for example, in television post production facilities, constitutes the multi-generation process referred to in the description herein. As well known in the art, the layering processes may be performed, for example, by apparatus such as video switchers, digital optics data manipulating apparatus and/or graphic art systems.

Although the invention is described herein relative to video image data, it is to be understood that other types of data and respective processing systems may utilize the invention techniques. For example, the data may be a stream of data bits which are supplied to a transmission channel for transmission to and from a preselected utilization apparatus such as a satellite, etc., wherein the compressed data is fitted into a stream of data block lengths or have a preselected data rate, rather than be recorded in allotted spaces on magnetic tapes or disks.

In addition, to facilitate the description herein, the invention is described by way of example only, in terms of the standards imposed by the Joint Photographic Experts Group (JPEG), which concern technical descriptions of, for example, encoding and decoding algorithms and the encoded data format. In the standards, 8x8 blocks of pixel data are transformed via a suitable transform such as a discrete cosine transform (DCT), into respective 8x8 arrays of DCT coefficients. The 8x8 blocks of samples of pixel data are obtained by dividing the input sample array into contiguous 8x8 blocks of pixels which, in turn, are derived from a subdivision of, for example, a luminance component (Y), and chrominance components (R-Y, B-Y) image, with vertical resolution of 576 rows and horizontal resolution of 720 columns of the Y component, or 360 columns of the R-Y, B-Y components. The 8x8 array of DCT coefficients is ordered with the DC component in the upper left corner, with increasing horizontal "frequencies" to the right of the array and with increasing vertical "frequencies" towards the bottom of the array.

FIG. 2 illustrates in block diagram a data compression/decompression system modified in accordance with the present invention, for compressing and encoding video image data corresponding, for example, to the image data signal of FIG. 1, and also for decoding and decompressing the previously compressed and encoded data. The video image data are formed of a serial stream of 8 bit digital samples of the 8x8 blocks of pixel data recommended, for example, by the JPEG standard of previous mention, and are supplied, via the input bus 10, to a transform process herein illustrated as a discrete cosine transform (DCT) circuit 14 by way of example only. It is to be understood that other transform processes and other block sizes may be used instead. The resulting 8x8 array of transform coefficients is supplied as 12 bit samples from the DCT circuit 14 to a delay circuit 16 and thence to a quantizer circuit 18. The delay circuit 16 provides a time delay equivalent to the time required to estimate and select a quantizing factor via a parallel channel further described below. As shown, the quantizer circuit 18 typically includes a circuit 17 for effectively dividing the transform coefficients by selected quantizer values, and a circuit 19 for rounding (truncating) the resulting values of the division process. The quantizer circuit 18 is coupled to an entropy encoder circuit 20 which is illustrated herein by way of example only, as a Huffman encoder. It is to be understood that other equivalent encoding processes may be used instead. The signal is provided on an output bus 22 as a compressed/encoded video data signal, which is in a suitable format of 8 bit digital samples for recording on tape or disc, or for transmission to other utilization apparatus. The output signal from the encoder circuit 20 may be a serial stream of digital samples of varying numbers of bits. A typical system for providing the functions of the compression/encoder circuits 14, 18, 20 may be found in EP-A-0469648.

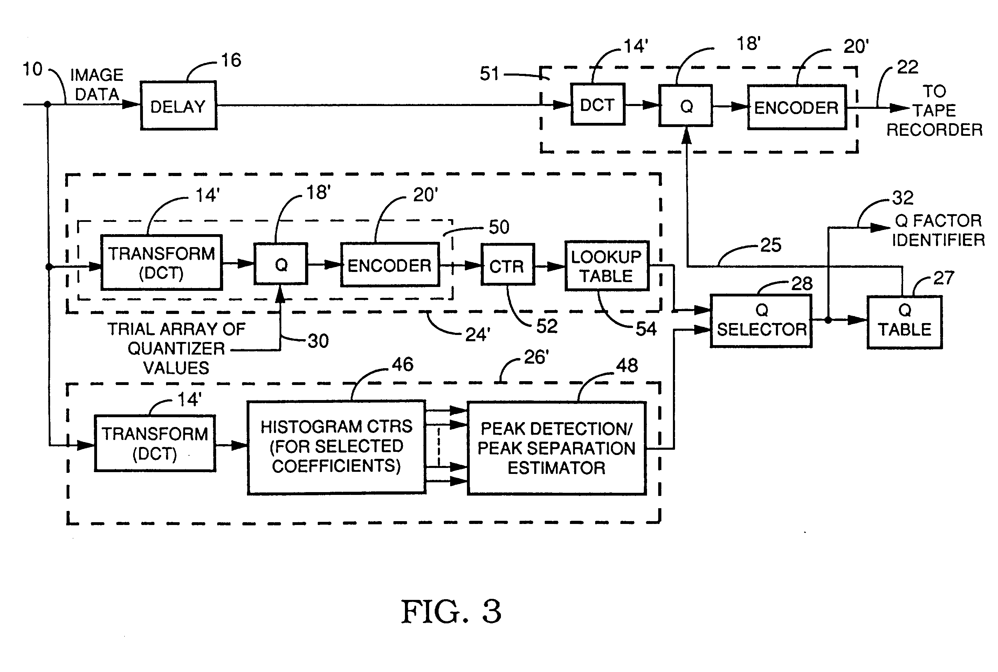

In accordance with the invention, the compression/decompression system also supplies the output of the DCT circuit 14 to a "required" Q estimator circuit 24 as well as to a "previous" Q estimator circuit 26. As implied by the titles, the circuit 24 provides means for determining the quantizing factors for a subsequent compression/decompression process, and the circuit 26 provides means for determining unknown quantizing factors used in a previous compression/decompression process, as further described in FIGs. 3-5. For simplifying the description, the letter "Q" is used herein at times as a convenient identification for an array of individual quantizer values, one for each coefficient to be quantized. The outputs of the two estimator circuits 24, 26 are supplied for example, as 7 bit digital samples, to a Q selector 28 whose output, in turn, enables one Q factor from a Q lookup table circuit 27. In the JPEG standard, each array may contain 8x8 or 64 individual quantizer values.The table circuit 27 contains a selected number of arrays of quantizer values, and for the 7 bit input shown here contains 128 arrays of 64 quantizer values. The quantizer values corresponding to the selected array are supplied to the quantizer circuit 18 via a bus 25, and determine the compression ratio resulting from the compression process. More particularly, Q selector 28 and table circuit 27 supply digital values corresponding to the quantizer values to be used by the divider circuit 17 in the compression process.

Thus, in a first generation of a record/playback process, the transform coefficients from the DCT circuit 14 are supplied to the required Q estimator circuit 24, which also receives a trial array of quantizer values supplied via a trial Q bus 30. The trial array of quantizer values is a mid-range value selected by experience for an image of average information complexity. The required Q estimator circuit 24 generates a signal indicative of how much quantization is required to provide the number of bits of compressed data which just fills the allotted space in the data block to be recorded, or which provides the desired data block length or average data rate in a serial stream of data samples. More particularly, the Q estimator circuit 24 in turn provides, to the Q selector 28, a Q factor identifier signal which identifies the array which will properly compress the video image data to the preselected extent needed for the particular application. The Q lookup table circuit 27 then supplies the individual quantizer values of the selected array to the quantizer circuit 18. The preferred embodiment herein describes the use of lookup tables to provide individual quantizers, but a combination of lookup tables and computation is equally applicable. For example, if i and j represent respectively the horizontal row and vertical column numbers of an array, and k represents the Q factor identifier number, then an individual quantizer value q may be computed from an equation such as the following: qᵢⱼ = 3 to the power of (integer((i+j)/k)). A typical system for providing the functions of the required Q estimator circuit 24 may be found in EP-A-0469648.

In a next generation of a multi-generation process in which layering may have increased or decreased the image complexity, the transform coefficients corresponding to the new video image data are supplied from the DCT circuit 14 to the previous Q estimator circuit 26 as well as to the required Q estimator circuit 24 as in the previous generation. The previous Q estimator circuit 26, supplies a signal indicative of how much quantization, if any, was used previously on the incoming video image data. The input signal may be that supplied in a second or later generation, or may be an unknown signal recovered from a new tape wherein the data might or might not have been compressed. The new Q factor identifier signal from the previous Q estimator circuit 26 also is supplied to the Q selector 28 along with the output from the required Q estimator circuit 24. Thus, after the first generation, the signal supplied by the Q selector 28 is based not only on the estimate of what Q factor is required, but also on what Q factor was used in the compression process of the last generation. That is, the Q selector 28 selects one of the values from the two estimator circuits 24, 26. The Q factor selected is the one which provides the greater compression, unless the Q factor from the required Q estimator 24 provides significantly less compression (typically a factor of five) than the Q factor from the previous Q estimator 26. In this situation, the complexity of the image has decreased so significantly that it would be impractical to not lower accordingly the compression ratio, and thus the Q factor from the required Q estimator 24 is selected. As in the previous generation, the appropriate individual quantizer values generated on bus 25 via the Q lookup table circuit 27, are supplied to the quantizer circuit 18 and are applied to the video image data signal which has been suitably delayed by the delay circuit 16. The compressed and encoded video image data then are supplied via the output bus 22 to a recorder for subsequent recording, to a transmission channel for other utilization, or to other utilizing means, as depicted previously via the block 8 in FIG. 1.

The identities of the Q factors, or of the individual quantizer values, used in the compression process also are suitably recorded or transmitted as overhead along with the compressed video image data, as depicted via the line 32. The Q factors or quantizer values used in the compression process thus are available for use in a subsequent decompression process, which is another condition of the JPEG standard.

In a subsequent decompression process when the previously compressed and recorded video image data is recovered from an outside source such as the tape recorder of previous mention, the compressed image data is supplied via a bus 34 to a decoder circuit 36. In addition, as depicted via a bus 38, a signal identifying the Q factors or quantizer values used in the previous compression process also is recovered as the Q factor identifier signal which was previously inserted as overhead in the data signal. The identifier signal is supplied to a Q lookup table circuit 29 similar to the Q lookup table circuit 27, wherein the former supplies the individual quantizer values of the same array previously used in the compression process, to a dequantizer circuit 40. The dequantizer circuit 40 includes a circuit 39 for multiplying and a circuit 41 for rounding, which perform the inverse processes of the quantizing process performed by circuit 18, in generally conventional fashion. The decoder circuit 36 decodes the recovered image data and supplies the decoded data to the dequantizer circuit 40. The resulting transform coefficients are supplied, for example, as 12 bit digital samples to an inverse transform circuit 42. The latter circuit supplies a video image data signal on the output bus 12, which signal is a reconstruction of the original video image data signal on input bus 10, with some degeneration in the signal due to the rounding process inherent in the reconstruction part of the compression/decompression processes.

Various manufacturers supply data compression/decompression integrated chips that include the DCT circuit 14, the quantizer circuit 18 and the entropy encoder circuit 20 within a single chip. Thus, since this and similar chips are readily available, a practical implementation of the circuit of FIG. 2, including the required and previous Q estimator circuits 24, 26, is illustrated in FIG. 3. Like components are similarly numbered, with a prime symbol added to components in the integrated chips of FIG. 3 which might not be precisely the same but are in essence equivalent.

As in FIG. 2, the image data are supplied via the bus 10 to the delay 16, and thence to an integrated compression chip 51 containing a DCT circuit 14', a quantizer circuit 18' and an encoder circuit 20'. The quantizer circuit 18' is supplied with the individual quantizer values via the bus 25, and the encoder circuit 20' supplies the compressed/encoded signal on the output bus 22. In like fashion, the required Q estimator circuit 24' includes an integrated compression chip 50 which includes the DCT circuit 14', the quantizer circuit 18' and the encoder circuit 20'. As in FIG. 2, the trial array of quantizer values is supplied to the quantizer circuit 18' via the bus 30. The encoder 20' of the chip 50 supplies a digital data stream corresponding to the actual number of data bits generated for a given data block to be recorded after the data is compressed, to counter means 52 of the required Q estimator circuit 24'. The output of the counter means 52 comprises the number of data bits counted per data block, and is supplied to a lookup table circuit 54. The lookup table in circuit 54 stores a Q factor identifier for each of a selected number of ranges of possible count results from the trial compression carried out in the chip 50. Each Q factor is that which, based on experimental data from a wide range of images, would produce the desired compression if used in place of the trial array of quantizer values first supplied on the bus 30. The number of bits produced by the trial compression thus determines the identification of the required Q factor to be selected. In the over-quantizing embodiment, the lookup table circuit 54 includes means for providing an offset in the stored lookup tables. Thus, a suitable input from, for example, a control panel (not shown) may set a selected offset of one or more lookup tables, to thereby supply, for example, the over-quantizing factor. The offset corresponds to the expected increase in image complexity. The corresponding identifier signal is supplied to the Q selector 28 at a field or frame rate depending upon whether the data source is field or frame based. The selector 28 may be a maximum value selector in a simple embodiment. The selector 28 supplies the resulting Q factor identifier signal to the tape recorder via the bus 32 and also supplies it to the Q lookup table circuit 27 at the field or frame rate. The circuit 27, in turn, supplies the individual quantizer values to the quantizer circuit 18' of the chip 51. Given a particular Q factor identifier signal, the Q lookup table circuit 27 produces the actual quantizer values of the array which is identified by the Q factor identifier signal.

In subsequent generations, as described in FIG. 2, the previous Q estimator circuit 26' also supplies a Q factor identifier signal corresponding to the Q factor previously used, to the Q selector 28. To this end, the transform coefficients from the DCT circuit 14' are supplied to a histogram counter circuit 46, which counts the occurrences of selected coefficients in terms of expected maximum and minimum amplitudes. As generally known, the histogram counter circuit 46 includes a plurality of counters, each of which is clocked in response to the receipt of its respective digital number. The resulting count signals are supplied to a peak detection/peak separation estimator circuit 48 which uses combinational logic or lookup tables to distinguish the maximum and minimum counts and thus the peaks and valleys of the histogram. To this end, the circuit 48 detects, for example, the separation between the peaks and then generates a signal indicative of the previously used Q factor identified by the peaks. Thus the circuit 48 includes a Q identifier which associates a particular Q factor with each value of peak separation. The identifier signal is supplied to the Q selector 28 which, along with the Q table circuit 27, supply the quantizer values to the quantizer circuit 18' via the bus 25, as previously described.

As discussed above, in situations where the previous Q factor is not available explicitly such as in second or subsequent generations wherein the over-quantizing factor selection technique is being applied, the Q factor is estimated from histograms of unquantized transform coefficients. In order for the described technique to determine the precise Q factor used the Q factors must be drawn from a set of discrete Q factors which differ sufficiently for an unambiguous determination to be made. Furthermore, the Q factor should be uniquely determined from an estimate of relatively few quantizer values in the Q factor array. If some group of quantizer values in each array have the same value, then the precision of the technique is improved by including amplitudes from all the corresponding coefficients in a single histogram. For a DCT based system, for example, the lowest 3 or 5 AC coefficients may all be multiplied by the same quantizer value in any given array. The value of this quantizer value should differ from array to array, and will uniquely identify the array and hence distinguish all the quantizer values in the array.

In a first algorithm, for a known set of Q factors, the histogram accumulation may be limited to selected discrete amplitudes which represent selected known minima and maxima which could result from the set. Simplistically the largest maximum or smallest minimum should uniquely identify a particular Q factor. In practice some logical function of several maxima and minima will give a more reliable estimate. As an example, each quantizer may be represented by p histogram counters at expected maxima and expected minima. An estimator such as previous Q estimator 26 then identifies a particular Q factor only if its maximum counters are among the r highest counts and its minimum are among the m lowest. The choice of p, r and m depends on the set of Q factors to be discriminated and on the experimentally determined histogram variability for a particular application.

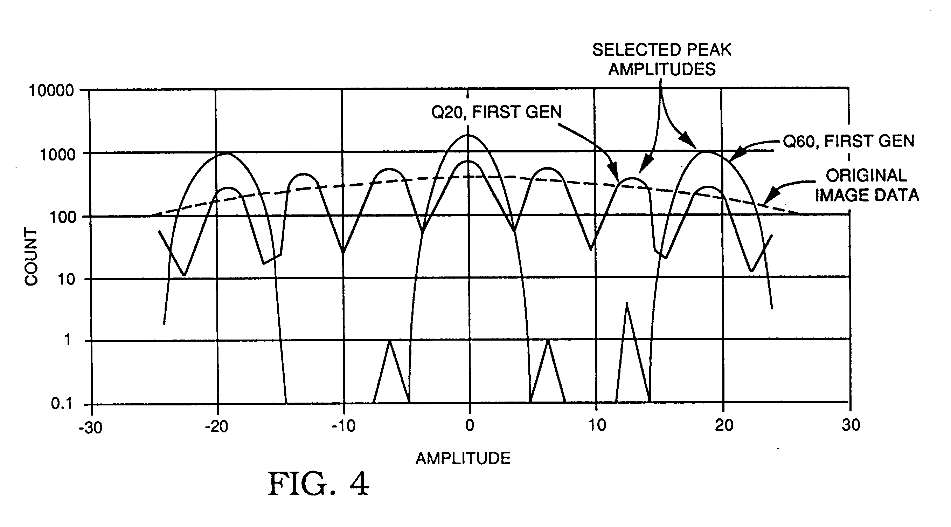

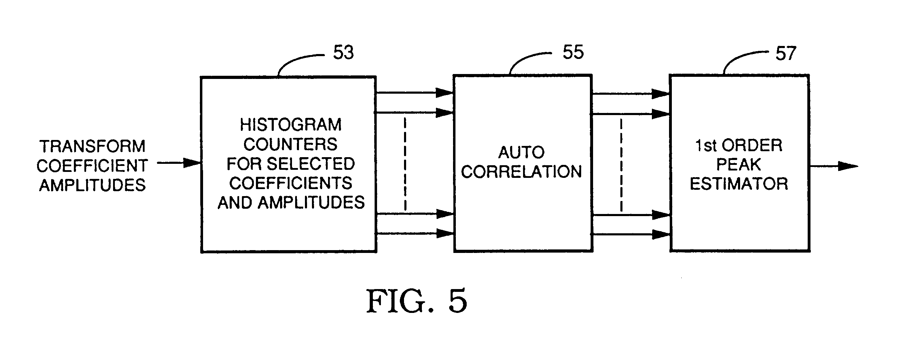

FIG. 4 illustrates a histogram of measured outputs of the first five AC coefficients generated in a computer simulation, and further augments the description above of the previous Q estimator circuits 26, 26'. The curves of the histogram depict the coefficient count versus amplitude of the original picture or image after the image data is transformed. In particular and as labeled in FIG. 4, the curves represent the original image data with no quantization, and the image data during first generations in which data compressions are performed using dividing quantizer values of 20 and 60, drawn from Q factors labeled for convenience Q20 and Q60. Thus, the histogram counter circuit 46 of FIG. 3 counts the number of occurrences of selected coefficients as represented by the Q20 and Q60 curves in FIG. 4. The peak detection/peak separation estimator circuit 48 then distinguishes the peaks and/or valleys of the curves in the histogram, whereby the quantizing factor value used in the previous compression process is determined. That is, the separation between peaks in a histogram is equal to the dividing quantizer used. Several different algorithms may be used to measure the separation, as discussed in FIGs. 3 and 5.

In the general technique where over-quantizing Q factors are selected, the Q selector 28 supplies the over-quantizing factor value to the quantizer circuit 18' of chip 51. Then as described previously in FIG. 2, in subsequent generations after the first, the Q selector 28 first compares the required and previous Q factor values from circuits 24', 26', respectively. If the required Q factor is smaller than the previous Q factor used the last generation, then the Q selector 28 supplies the previous Q factor to the quantizer circuit 18'. That is, the value of the previously used larger Q factor from circuit 26' is used, as was used in the first generation. The same procedure is followed in subsequent generations, wherein the same preselected over-quantizing factor preferably is used throughout all the following generations.

FIG. 5 illustrates an alternative embodiment of the previous Q estimator circuit 26' of FIG. 3, wherein an auto correlation, Fourier, or similar transform is applied to the histogram. In the corresponding algorithm, the fundamental frequency derived in the resulting output provides the period or peak separation directly. To this end, the transform coefficients are supplied from the DCT circuit 14' to a histogram counter circuit 53 similar to the circuit 46 of FIG. 3 in that the counters therein count the occurrences of selected coefficients in terms of their amplitudes. The resulting count signals are supplied to a generally conventional auto correlator circuit 55 which provides the fundamental frequency indicative of the peak separation directly. The resulting signal is supplied to a first order peak estimator circuit 57, which scans the auto correlator circuit 55 output for the largest non-zero order peak. Thus the estimator circuit 57 scans from a zero offset upwards while looking for a first minimum and then continues to scan until it finds a first maximum. Being dependent on many histogram values, this peak may be accurately determined. The circuit 57 supplies the previously used Q factor identifier signal to the Q selector 28.

It is to be understood that the previous Q estimator 26 and Q selector 28 of FIGs. 2, 3 are not required in the event that the invention technique of using a non-degenerative set of quantizing factors is used. That is, since a different Q factor is selected every generation without an increase in noise, there is no need to know the Q factor previously used, only the required Q factor.

If the Q factor is not changed during multiple generations of image data, it is acceptable in the quantizing process to employ a normal rounding algorithm of adding a constant 0.5 followed by truncation. However, if the Q factor is changed prior to a subsequent generation, then it is desirable, in accordance with the invention, to modify or "dither" the rounding algorithm to add a pseudo random number in the range 0...1 (instead of the constant 0.5) to all coefficient numbers greater than a preselected threshold. The preferred threshold generally is in the range of ± 1 to 2. Information sufficient to allow the re-creation of the sequence of pseudo random numbers is forwarded along with the data. The regenerated sequence is effectively subtracted when the image data is decompressed.

The use of dither rounding is not applied in certain embodiments of the invention, such as when the Q factor is selected from the finite non-degenerative set of Q factors of previous mention. That is, dither rounding preferably is applied with the embodiment which uses over-quantizing factors, and then only when the Q factor is changed in a subsequent generation after the first generation. The dither rounding technique has advantages particularly when no attempt is made to use precisely the previous Q factor.

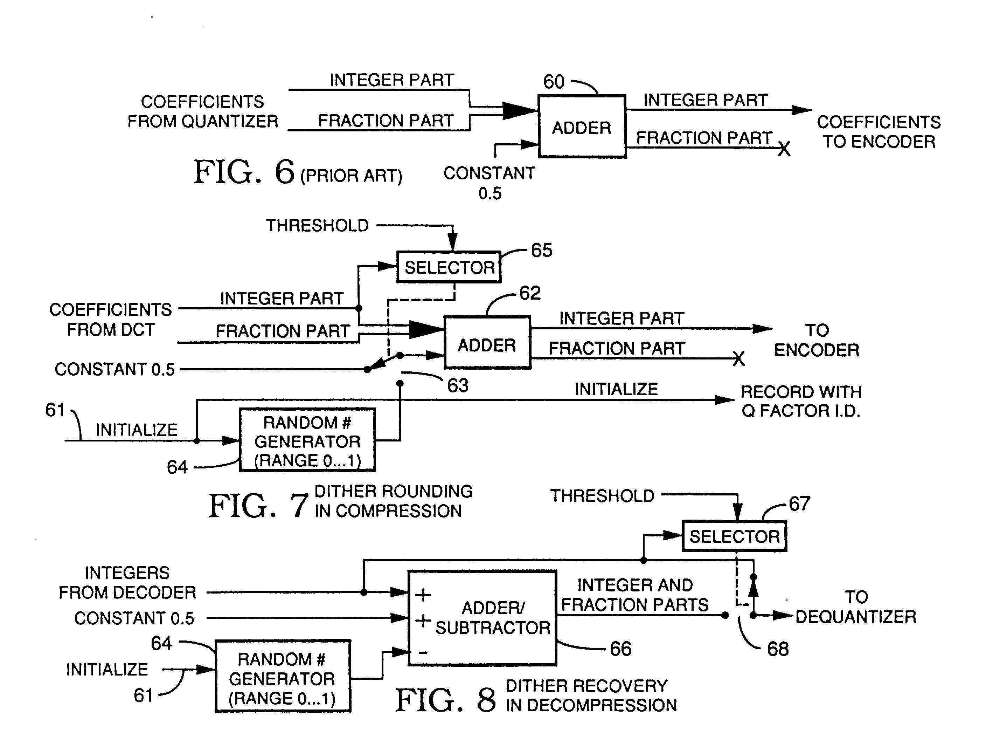

To further illustrate the technique of dither rounding, FIG. 6 depicts in functional block diagram, a typical rounding technique of adding a constant 0.5 to the coefficient values, and then truncating the fractional part of the resulting summations. To simplify the illustration, the coefficients are shown separated into an integer part and a fraction part, and the parts are supplied to an adder 60. A second input of a constant 0.5 also is supplied to the adder 60, which adds the 0.5 to the coefficient values. The results of the rounding process are provided by the integer part of the summation, with the fraction part of the summation being truncated to provide the rounding.

In accordance with the dither rounding technique of the invention, in FIG. 7 the coefficients again are depicted as integer and fraction parts, with the coefficient values supplied to an adder 62. A random number generator 64, which is initialized by an initialize signal input on a line 61, supplies a pseudo random number sequence to a second input of the adder 62 via a switch 63. A second contact of the switch 63 is coupled to a constant 0.5 signal source. A selector 65 which is responsive to a threshold input, is coupled to receive the coefficients generated by the DCT circuit. In a situation where the coefficient is less than the threshold, the selector 65 switches the switch to the constant 0.5 input and the conventional rounding technique is applied to the incoming coefficient. In accordance with the invention, when the coefficient is larger than the threshold, the selector 65 couples the psuedo random number generator 64 to the adder 62 via the switch 63. In the latter situation, the adder 62 adds the successive pseudo random numbers to respective coefficients, and supplies the integer parts of the summations to the encoder. The fraction parts of the summations are truncated, that is, are discarded. Optionally, the error introduced may be minimized by subtracting the pseudo random numbers. The initialize signal is forwarded along with the data, whereby the noise added due to the pseudo random numbers is partially subtracted from the signal in the decompression process. That is, the initialize signal identifies the start of the pseudo random sequence whereby it may be used in the decompression process. A certain amount of noise remains in the signal due to the information lost in the truncation process. As mentioned, the selector 65 switches in the dither rounding portion of the circuit only for coefficient values above the threshold which may be of the order of, for example, ±1 through ±3. The frequency spectrum of the pseudo random number sequence generally is selected to minimize the visibility of the residual noise, for example, may be evenly distributed or may be weighted towards higher frequencies.

FIG. 8 depicts one example of dither rounding recovery in the decompression process. The integers corresponding to the coefficients are supplied to a selector 67, to a first contact of a switch 68 and to a positive input of an adder/subtractor 66. The selector 67 also is supplied with a threshold input of, for example, ±1 through ±3. A constant 0.5 input signal is supplied to a second positive input of the adder/subtractor 66. A random number generator 64 receives the initialize signal forwarded from the compression process via the line 61, and supplies the same pseudo random number sequence to a negative input of the adder/subtractor 66. The adder/subtractor 66 provides an output of the combined integer and fraction parts corresponding to the transform coefficients, to a second input of the switch 68. The common output of the switch 68 supplies the coefficients to the inverse transform circuit 42 as in FIG. 2. Thus, the selector 67 provides the means for adaptively switching the switch 68 to the pseudo random number generator, that is, to the adder/subtractor 66 output when the coefficient value exceeds the threshold value, and vice versa. The coefficients are either rounded in accordance with a typical constant 0.5 rounding procedure, or are rounded in accordance with the dither rounding procedure of the invention, as determined by the threshold. It is to be noticed that the dither rounding is applied uniquely directly to the transform coefficients supplied by the dequantizer 40.

It is to be understood that any procedure which is mathematically equivalent to the above dither rounding technique, is equally applicable. For example, an appropriate pseudo random number sequence in the range -0.5 to +0.5 is equivalent to the original sequence of 0...1.0.

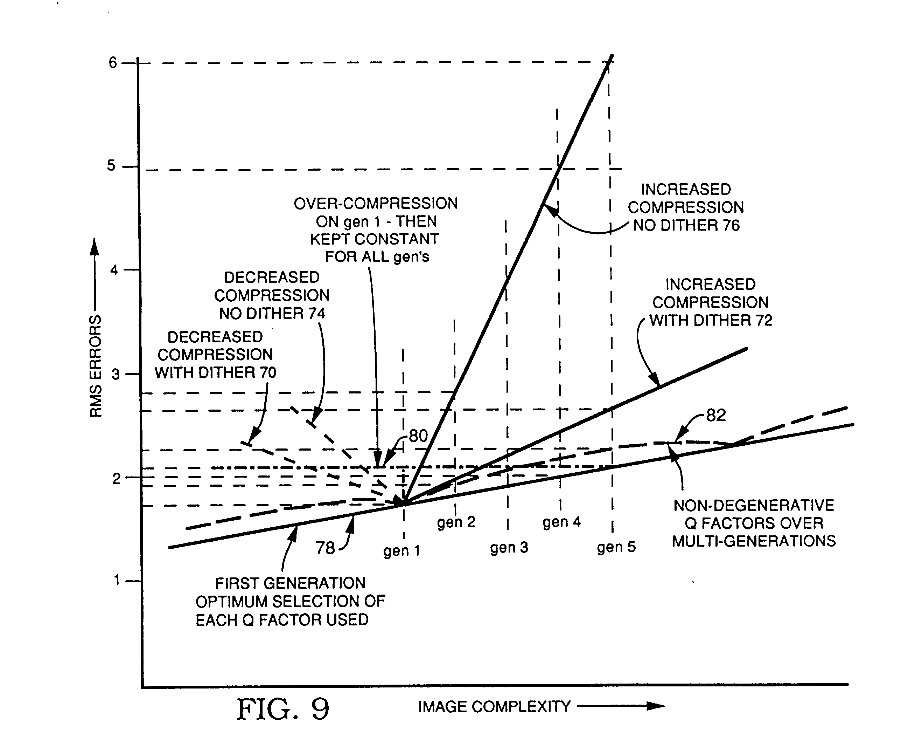

The importance of the strategy of not changing the Q factor with each generation is emphasized in FIG. 9, which qualitatively illustrates the relationships between the invention embodiments of selecting an over-quantizing Q factor, of selecting a Q factor from the non-degenerative set of Q factors, and of dither rounding in the event an over-quantizing factor must be changed in a subsequent generation of multi-generations. The relationships apply in situations wherein image complexity is increased or decreased by data layering during a generation. The curves illustrate the relative root mean squared (RMS) errors for an image of varying complexity when applying the invention embodiments, and depict the RMS errors for a first and several subsequent generations, given specific Q factors chosen to provide a constant compression with and without the dither process of previous description. The 'with dither" and "no dither" curves 70,72 and 74,76, respectively, (both pairs of solid line and short dash curves) apply to prior art techniques, as well as to the invention over-quantizing technique when the same over-quantizing value is changed in a subsequent generation of a multi-generation process. Note that the units used for RMS errors are qualitative and are used herein only as a means for comparing the decrease in RMS errors when using the invention techniques. It can be seen from the "first generation" curve 78 (solid line curve) that a significantly small change in RMS error results with increased or decreased complexity of the image, under conditions where the image data is being processed through a single generation, and an optimum Q factor is selected for each compression/decompression first generation. An optimum Q factor is that Q factor which precisely fits the data compressed thereby into the allotted data recording space or data rate, as is commonly done in prior art compression systems. The "over-compression" curve 80 (short dash dot curve) also illustrates the embodiment of over-quantizing the image data on the first generation, and then maintaining the same over-quantizing factor for subsequent generations in which layering may or may not be performed.

For example, assuming a Q factor which provides a compression ratio of 3:1 for the given image complexity, the RMS error for a first generation using an optimum selection of the Q factor is illustrated herein by curve 78 as about 1.7. In a second generation during which image complexity is increased due to layering, if a larger Q factor is used to provide the same 3:1 compression ratio, the RMS error will increase in accordance with the "no dither" curve 76 to about 2.8. However, if the larger (over-quantizing) Q factor had been selected for the first generation with RMS noise of about 2.1, and had been used again in the second generation, the RMS error will increase in accordance with the "over compression" curve 80 and would still remain at 2.1. That is, there is no increase in noise over that incurred in the first generation. Similarly, after five generations, with the image complexity increasing each generation due to layering, the RMS error generated by using a new, optimum Q factor each generation (as in the prior art) would be about 6.0 as depicted by the "no dither" curve 76. On the other hand, if the Q factor used in the fifth generation is still the same over-quantizing Q factor used in the first generation, and if the same over-quantizing Q factor has been used in the second through fourth generations, then the RMS error is still only about 2.1 as depicted by the over-quantizing curve 80. This is a marked improvement on the RMS error of 6.0 generated by the prior art system of selecting new, optimum Q factors for each generation.

In the event that an over-quantizing Q factor is selected and the complexity of the layered image after a few generations exceeds the capabilities of the over-quantizing Q factor, then the excessive RMS errors that would be generated may be sharply reduced by applying the dither rounding technique of the invention. To illustrate, changing the Q factors through the generations up to the fifth generation without using the over-quantizing technique or the dither rounding technique (see curve 76) would generate an RMS error of 6.0. On the other hand, applying the dither rounding technique reduces the RMS error to about 2.65 as derived from the "with dither" curve 72 of FIG. 9.

As illustrated by the curve 82 labeled "non-degenerative Q factors" (dashed heavy line), consistently low RMS errors are experienced in multi-generations of image data compression/decompression with layering, if the Q factor values are selected from the pre-defined finite non-degenerative sets of Q factors of previous mention. In such technique, a new and different Q factor may be selected for each subsequent generation of compression/decompression if, and only if, each Q factor is selected from the non-degenerative set. Thus, for example, if all quantizer values in the first generation Q factor array are 1, and if layering increases the complexity of the image data, then an effective Q factor for the second generation may be selected by changing some of the corresponding quantizer values in the subsequent array to 3 and/or 9. The numbers selected are commensurate with, the added complexity of the image due to the layering process. Subsequent generations may utilize arrays wherein selected corresponding quantizer values are increased to 3 or 9 or even 27. That is, in a preferred embodiment, the corresponding linear quantizer values in successive arrays have a preferred numerical relationship of a ratio of the order of three Thus the corresponding quantizer values of a non-degenerative set of arrays may be selected as a sequence 0.5, 1.5, 4.5, etc. or 2,6, 18, etc., or any other usable sequence having a numerical relationship between corresponding quantizers of successive arrays of the order of three.

In this latter non-degenerative Q factor embodiment, the Q factors may be said to be "over-quantizing" values in that they generally compress the image data sufficiently to allow the compressed data to readily fit into the desired data block spaces. That is, the non-degenerative set of Q factors generally do not precisely fit the compressed data into a given space in time or block length. Thus as depicted by the curve 82 in FIG. 9, the RMS error generated in the first generation mentioned above, using a corresponding Q factor (which is taken from a non-degenerative set of Q factors), is about 1.7. A second generation after layering has been performed and using a Q factor from the non-degenerative set, in which some of the quantizer values of the array are three times larger, provides an RMS error of about 1.9, and in the fifth generation an RMS error of about 2.25 is experienced. This RMS error also clearly is preferable to the error of 6.0 generated with the conventional method of changing Q factors each generation without dither rounding (curve 76), or the 2.65 error generated when further using dither rounding (curve 72).

As depicted by comparing the first generation curve 78 with the short dash curves 70, 74 labeled "with dither" and "no dither", respectively, it also is preferable to over-quantize and then maintain the same Q factor in a particular multi-generation operation, even when the complexity of the image is decreased after a first generation. As may be seen from the curve 74, the use of a smaller Q factor with each generation of less complexity, without using the dither rounding process, causes a significant increase in RMS error. Use of the dither rounding technique lessens the RMS error as shown by curve 70. However, it is preferable to maintain the same Q factor through the generations of decreasing image complexity, unless there is a significant decrease in image complexity. If there is a large decrease in complexity, (e.g., a factor of five) it is more practical to change the Q factor accordingly, to improve the picture quality. This is particularly true since the short dash curves 70, 74 curve downwardly to meet the curve 78 if they are plotted further to the left of the scale shown in FIG. 9.

However, it is even more preferable to use Q factors of the non-degenerative set during each of the generations, since then it is not necessary to determine the Q factor used in a previous generation of compression. Neither is it necessary to use the dither rounding process. However, there is a compromise made in picture resolution due to the larger steps between the non-degenerative quantizer values in successive arrays.

Thus, it may be seen that, if successive generations of images increase in complexity, requiring an effective increase in compression ratio, a lower RMS error results by using either of the two techniques of the invention for selecting Q factors. In the first technique, the first generation is over-compressed and then the same quantizing factor is held constant for no further degradation in the image quality. It also is preferable to hold the Q factor constant even when successive generations would allow an effectively lower compression ratio. In the second technique, a Q factor is chosen from the predefined non-degenerative set of Q factors whose corresponding quantizer values have the special numerical relationship to each other, whereby a lower RMS error results even though a different Q factor may be selected for every generation of compression.

Concerning the second technique, criteria for selecting a non-degenerative set of quantizing factors are as follows. First, if quantization is increased in a particular generation, then the quantizer transfer function output = F (input), for each of the frequency components, must not have threshold values which are close to reconstruction values from the previous generation quantizer transfer function. In the absence of such a condition, reconstructed values which are spread slightly by the transform and other rounding processes, would split into two ranges, adding errors. Second, the reconstruction values must minimize errors for both a uniform distribution (first generation) and for values clustered around the reconstruction values of the previous generation. This implies that reconstruction values must lie approximately half way between threshold values, and must also be substantially a subset of the reconstruction values of the finer quantizer. Third, the reconstruction values preferably should also include the value zero to provide compression using run length coding. If there is to be freedom to choose any Q factor from the set at any generation, then the relationship of the above criteria should hold between all corresponding quantizer values in the set of arrays.

Examples of three non-degenerative linear quantizing transfer functions which meet the above criteria and which exemplify progressively coarser linear quantizing values, are as follows. As may be seen, reconstruction values are selected half way between threshold values, but clearly there are a range of values about the half way value which may be used as well. Likewise, a subset can have a range of values which effectively may be used, as contemplated by the invention.

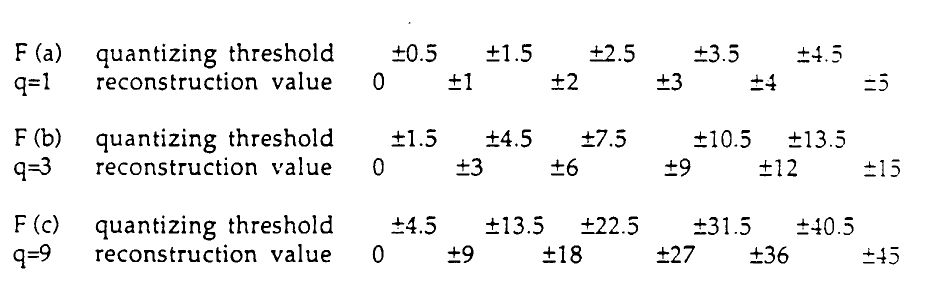

Examples of three non-degenerative non-linear quantizing transfer functions which have closer ratios than the ratio of 3:1 exemplified in the linear functions illustrated above, also may be constructed which meet the above first, second and third criteria. It is to be noticed however that the non-linear quantizing transfer functions do not have to comply with the condition of having a numerical relationship of the order of three between corresponding values in different arrays. The following series of threshold values is one example of acceptable progressively coarser non-linear quantizing values. Reconstruction values again are selected half way between threshold values, but may use a range of values.

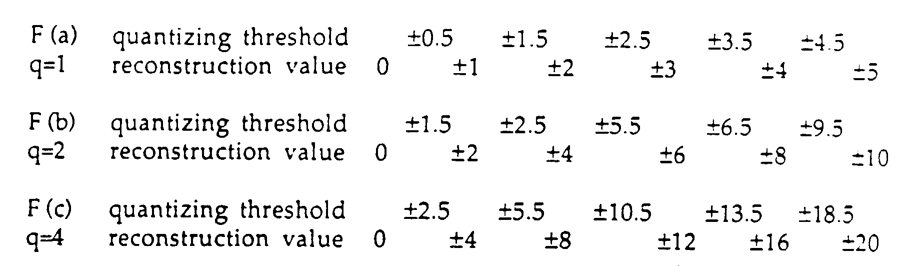

This set has the advantage of smaller average ratios between arrays of the set, but the threshold intervals are not constant. Implementation would be more complex and would be inconsistent with the JPEG specification of previous mention.

A simpler technique for obtaining linear non-degenerative Q factors with individual quantizer values, may be derived from the relationship q value = K*(3**n), where K is a constant for any one transform coefficient across the set of Q factors, and n is any positive integer including zero. This equation may be used, for example, to generate the exemplary sequence 1,3,9,27, for K=1. Normal rounding is assumed. If it is desired, for psychophysical reasons, to maintain particular ratios between quantizer values in an array, then n must be a constant for each array and K is selected for the psychophysical reasons, resulting in Q factors which grow by a factor of the order of three from array to array. This normally would not allow sufficient resolution in selecting a Q factor. If n is allowed to vary over the array elements, then the effective average Q factor may be changed in smaller steps but there would be abrupt changes in the quantizer value for a particular transform coefficient from one quantizer array to another.

Thus, as depicted in FIG. 9, there is a negligible multi-generation penalty in noise for an increase in quantization by a factor of the order of three, as, when using Q factors from the linear non-degenerative set of arrays. There is a slightly increased penalty for choosing Q factors intermediate the factor of approximately three, as shown by the "non-degenerative" curve 82 for the second through fourth generations. It is of interest to note that the "non-degenerative" curve 82 starts at the first generation with the same RMS error of 1.7 as shown by the first generation compression process. However, the "non-degenerative' curve 82 generates the same RMS value as does the "first generation" curve 78 at a quantizer value of the order of three times the first generation quantizer value. As previously discussed, three is the preferred ratio of the invention embodiment which uses the linear non-degenerative set of Q factors.

By way of further illustration, there follows an example of a set of "non-degenerative" arrays, wherein the quantizer values q have been selected using the formula of previous mention. To facilitate the description, the base table and the arrays Q1 through Q4 have only a 4 by 4 matrix, rather than the 8x8 matrix of previous discussion. Also, only four arrays are depicted although in practice, dozens or even hundreds of arrays are used. The base table provides the value of K for each frequency coefficient, which values may be based on psychophysical tests. In the subsequent arrays, a change in n within an array provides the associated change in the corresponding quantizer values from array to array, allowing smaller steps in the increasing quantizer values in the arrays.

| Base Table | | | | | | | | |
|---|---|---|---|---|---|---|---|---|
| 10 | 10 | 10 | 15 | | | | | |
| 10 | 10 | 15 | 15 | | | | | |
| 10 | 15 | 15 | 19 | | | | | |
| 15 | 15 | 19 | 23 | | | | | |
| | | | | | | | | |

| Q1 | | | | | Q2 | | | |
|---|---|---|---|---|---|---|---|---|
| 10 | 10 | 10 | 15 | | 10 | 10 | 10 | 45 |
| 10 | 10 | 15 | 15 | | 10 | 10 | 45 | 45 |
| 10 | 15 | 15 | 19 | | 10 | 45 | 45 | 57 |
| 15 | 15 | 19 | 23 | | 45 | 45 | 57 | 207 |
| | | | | | | | | |

| Q3 | | | | | Q4 | | | |
|---|---|---|---|---|---|---|---|---|
| 10 | 10 | 30 | 45 | | 10 | 10 | 30 | 45 |
| 10 | 30 | 45 | 45 | | 10 | 30 | 45 | 45 |
| 30 | 45 | 45 | 57 | | 30 | 45 | 45 | 171 |
| 45 | 45 | 171 | 207 | | 45 | 135 | 171 | 207 |

The Q factor may be selected from any member of this set at any generation without incurring a multi-generation penalty in noise. It may be seen in FIG., 9 that most of the set results in RMS errors which are only slightly worse than for the default weighting used in the earlier simulations with variable Q factor. In any particular application, the slightly higher RMS error of using the non-degenerative set of Q factors, is a trade off for a simpler implementation which does not require the previous Q estimator circuit 26, 26' or the Q selector 28, nor the risk of selecting an inadequate margin as in the technique which selects an over-quantizing Q factor at the first generation compression.

## Claims

1. A method of reproducing a data signal which digitally represents an image, the method comprising producing a multiplicity of generations of the data signal, each generation including a process of quantization of the data signal, so as to compress the image data to within a given constraint, and a process of de-quantization and thereby decompression, the method also including altering the complexity of the image data between selected generations by the replacement of a portion of the image data, the image being subject to degradation owing to the production of quantization noise; wherein at least some of the quantization factors for the processes of quantization provide more compression than that due to an optimum factor which would fit the data signal when compressed exactly into the said constraint and are selected and related to reduce substantially the quantization noise produced in the generations after the first relative to the noise which would be produced by the use of such an optimum quantization factor in those generations.

2. A method of reproducing a data signal, comprising producing a multiplicity of generations of the data signal, each generation including a process of quantization of the data signal, so as to compress the data signal to within a given constraint, and a process of de-quantization and thereby decompression, the method also including altering the complexity of the data signal between selected generations by the replacement of a portion of the data signal, the data signal being subject to degradation owing to the production of quantization noise; wherein the quantization factor for the process of quantization in the first generation is selected to provide substantial over-compression of the data signal relative to an optimum quantization factor which would provide just sufficient compression to fit the data signal within the given constraint, and the quantization factors for subsequent generations are either the same as the first quantization factor or are modified therefrom to accommodate a change in complexity of the data signal, whereby the degradation due to quantization is substantially reduced relative to that which would be produced by the use of an optimum quantization factor in those generations.

3. A method according to claim 2, wherein the quantization factors are determined by the steps of estimating an optimum quantizing factor which compresses the data signal sufficiently to fit the data into an allotted data space; selecting for the first generation an over-quantizing factor which is larger than said optimum quantizing factor to substantially over-compress the data such that the data does not fill the allotted data space; and using the same larger over-quantizing factor in subsequent compression processes during the corresponding successive generations of data quantization and dequantization.

4. A method according to claim 2 or 3, wherein the data represent an image and the complexity of the image data is changed in selected generations, wherein the quantizing factor for the first generation is determined in accordance with an expected cumulative change in image data complexity performed in subsequent generations.

5. A method according to claim 3, including supplying a trial array of quantizer values; determining whether the trial array of quantizer values fits the data into the constraint; performing any necessary iterations on the quantizer values until the data fits into the constraint; identifying said over-quantizing factor which substantially over-compresses the data in response to said iterations; selecting an array of quantizer values corresponding to the over-quantizing factors which over-compresses the image data; and quantizing the data in response to the selected array of quantizer values which over-compress the data.

6. A method according to claim 2, including the steps of transforming the data into selected transform coefficients prior to compressing the data; changing the quantizing factor in one of the generations; and applying a pseudo random number sequence to selected transform coefficients which exceed a selected threshold, to round off the coefficients randomly.

7. A method according to claim 6, including the step of generating the pseudo random number sequence within a range of 0 to 1.0 and with a pre-selected energy spectrum, for use in the step of applying.

8. A method according to claim 1 wherein quantization factors for the processes of quantization are selected only from a pre-defined finite non-degenerative set of factors, and the selected factors or close approximations thereof are employed in the various quantization processes, whereby to reduce in generations after the first the production of quantization noise arising from requantization of data which has been quantized in a previous generation.

9. A method of reproducing a data signal, comprising producing a multiplicity of generations of the data signal, each generation including a process of quantization of the data signal, so as to compress the data signal to within a given constraint, and a process of de-quantization and thereby decompression, the method also including altering the complexity of the data signal between selected generations by the replacement of a portion of the data signal, the data being subject to degradation owing to the production of quantization noise; wherein quantization factors for the processes of quantization are selected only from a pre-defined finite non-degenerative set of factors, and the selected factors or close approximations thereof are employed in the various quantization processes, the non-degenerative set being such that reconstruction values in a relatively coarse quantization are a sub-set of the reconstruction values in a relatively fine quantization in a different generation, whereby to reduce in generations after the first the production of quantization noise arising from requantization of data which has been quantized in a previous generation.

10. A method according to claim 8 or 9 wherein the quantizing factors correspond to multiple arrays of quantizer values, wherein corresponding quantizer values in successive arrays have a predetermined numerical relationship.

11. A method according to claim 10, wherein the numerical relationship is of the order of three and the non-degenerative set of quantizing factors is linear.

12. A method according to claim 8 or 9 wherein the data signal is in the form of transform coefficients, and wherein the non-degenerative set of quantizing factors are given by the expression K*(3**n), where K is a constant for any one transform coefficient across the set of quantizing factors, and n is any positive integer including zero.

13. A method according to claim 10 wherein the non-degenerative set of quantizing factors is non-linear and the numerical relationship is less than three.

14. A method according to claim 10, including storing a plurality of lookup tables corresponding to the non-degenerative multiple arrays of quantizer values; and selecting a lookup table which provides the array to compress the data signal into the constraint.

15. A method according to claim 8 or 9, further including supplying a trial array of quantizer values; determining whether the trial array of quantizer values provides a fit of the data into the constraint; performing any necessary iterations on the quantizer values, identifying a quantizing factor from said non-degenerative set which provides sufficient compression to provide said fit; selecting an array of quantizer values from said non-degenerative set which corresponds to said quantizing factor; and quantizing the data signal in response to the selected array of quantizer values.

16. A method according to any of claims 9 to 15 wherein the data signal represents an image and the alteration of the data signal corresponds to a modification of data within the image.

## Patentansprüche

1. Ein Verfahren zum Reproduzieren eines Datensignals, das digital ein Bild darstellt, wobei das Verfahren das Erzeugen einer Vielzahl von Generationen des Datensignals einschließt, wobei jede Generation einen Prozeß der Quantisierung des Datensignals, um so das Datensignal innerhalb einer bestimmten Vorgabe zu komprimieren, und einen Prozeß der Dequantisierung und dadurch der Dekomprimierung umfaßt, wobei das Verfahren auch das Ändern der Komplexität der Bilddaten zwischen ausgewählten Generationen durch Ersetzen eines Teils der Bilddaten einschließt, wobei das Bild einer Verschlechterung infolge der Erzeugung von Quantisierungerauschen unterworfen ist; wobei wenigstens einige der Quantisierungsfaktoren für den Prozeß der Quantisierung mehr Komprimierung als die infolge eines optimalen Faktors vorsehen, bei dem das Datensignal, wenn es komprimiert ist, exakt mit der Vorgabe übereinstimmt, und ausgewählt und verknüpft werden, um das Quantisierungerauschen, das in den Generationen nach der ersten erzeugt wird, relativ zu dem Rauschen, das unter Verwendung eines solchen optimalen Quantisierungefaktors in jenen Generationen erzeugt werden würde, wesentlich zu reduzieren.

2. Ein Verfahren zum Reproduzieren eines Datensignals, das das Erzeugen einer Vielzahl von Generationen des Datensignals einschließt, wobei jede Generation einen Prozeß der Quantisierung des Datensignals, um so das Datensignal innerhalb einer bestimmten Vorgabe zu komprimieren, und einen Prozeß der Dequantisierung und somit der Dekomprimierung umfaßt, wobei das Verfahren auch das Ändern der Komplexität des Datensignals zwischen ausgewählten generationen durch Ersetzen eines Teils des Datensignals umfaßt, wobei das Datensignal einer Verschlechterung infolge der Erzeugung von Quantisierungsrauchen unterworfen ist, wobei der Quantisierungsfaktor für den Prozeß der Quantisierung in der ersten Generation ausgewählt wird, um eine wesentliche Über-Komprimierung des Datensignals vorzusehen, und zwar relativ zu einem optimalen Quantisierungsfaktor, der gerade eine ausreichende Komprimierung vorsehen würde, sodaß das Datensignal mit der bestimmten Vorgabe übereinstimmt, und die Quantisierungsfaktoren für die nachfolgenden Generationen entweder die gleichen wie der erste Quantisierungsfaktor sind oder davon abgewandelt sind, um eine Anpassung an eine Änderung der Komplexität des Datensignals vorzusehen, wodurch die Verschlechterung infolge der Quantisierung relativ zu derjenigen, die durch die Verwendung eines optimalen Quantisierungsfaktors in jenen Generationen erzeugt würde, wesentlich verringert wird.

3. Ein Verfahren nach Anspruch 2, bei dem die Quantisierungsfaktoren bestimmt werden durch die Schritte des Abschätzens eines optimalen Quantisierungsfaktors, der das Datensignal ausreichend komprimiert, um die Daten in einen zugeordneten Datenraum einzufügen; des Auswählens eines Über-Quantisierungsfaktors für die erste Generation, der größer als der optimale Quantisierungsfaktor ist, um die Daten wesentlich überzukomprimieren, sodaß die Daten den zugeordneten Datenraum nicht ausfüllen; und des Verwendens des gleichen größeren Über-Quantisierungsfaktors in den nachfolgenden Komprimierungsprozessen während der entsprechenden aufeinanderfolgenden Generationen der Datenquantisierung und -dequantisierung.

4. Ein Verfahren nach Anspruch 2 oder 3, bei dem die Daten ein Bild darstellen und die Komplexität der Bilddaten in ausgewählten Generationen geändert wird, wobei der Quantisierungsfaktor für die erste Generation bestimmt wird in Übereinstimmung mit einer erwarteten kumulativen Änderung der Bilddatenkomplexität, die in nachfolgenden Generationen durchgeführt wird.

5. Ein Verfahren nach Anspruch 3, einschließend: Bereitstellen einer Versuchsgruppierung von Quantisiererwerten; Bestimmen, ob die Versuchsgruppierung von Quantisiererwerten die Daten in die Vorgabe einfügt; Durchführen von irgendwelchen notwendigen Iterationen an den Quantisiererwerten, bis die Daten mit der Vorgabe übereinstimmen; Identifizieren des Über-Quantisierungsfaktors, der die Daten in Erwiderung auf die Iterationen wesentlich überkomprimiert; Auswählen einer Gruppierung von Quantisiererwerten, die dem Über-Quantisierungsfaktor entspricht, der die Bilddaten überkomprimiert; und Quantisieren der Daten in Erwiderung auf die ausgewählte Gruppierung von Quantisiererwerten, die die Daten überkomprimieren.

6. Ein Verfahren nach Anspruch 2, einschließend die Schritte des Transformierens der Daten in ausgewählte Transformations-Koeffizienten vor dem Komprimieren der Daten; des Änderns des Quantisierungsfaktors in einer der Generationen; des Verwendens einer Pseudozufallszahlenfolge für ausgewählte Transformations-Koeffizienten, die eine ausgewählte Schwelle überschreiten, um die Koeffizienten statistisch abzurunden.

7. Ein Verfahren nach Anspruch 6, einschließend den Schritt des Erzeugens der Pseudzufallszahlenfolge innerhalb eines Bereichs von 0 bis 1,0 und mit einem vorgewählten Energiespektrum zum Gebrauch bei dem Schritt des Verwendens.

8. Ein Verfahren nach Anspruch 1, bei dem Quantisierungsfaktoren für die Quantisierungsprozesse nur von einem vordefinierten, endlichen, nichtdegenerierenden Satz von Faktoren ausgewählt werden, und die ausgewählten Faktoren oder enge Näherungen davon bei den verschiedenen Quantisierungsprozessen verwendet werden, wodurch bei den Generationen nach der ersten die Erzeugung von Quantisierungsrauschen reduziert wird, das bei Neuquantisierungen von Daten entsteht, die in einer vorhergehenden Generation quantisiert wurden.

9. Ein Verfahren zum Reproduzieren eines Datensignals, das das Erzeugen einer Vielzahl von Generationen des Datensignals einschließt, wobei jede Generation einen Prozeß der Quantisierung des Datensignals, um so das Datensignal innerhalb einer bestimmten Vorgabe zu komprimieren, und einen Prozeß der Dequantisierung und somit der Dekomprimierung einschließt, wobei das Verfahren auch das Ändern der Komplexität des Datensignals zwischen ausgewählten Generationen durch Ersetzen eines Teils des Datensignals umfaßt, wobei die Daten einer Verschlechterung infolge der Erzeugung von Quantisierungsrauschen unterworfen sind; wobei Quantisierungafaktoren für die Prozesse der Quantisierung nur aus einem vordefinierten, endlichen, nichtdegenerierenden Satz von Faktoren ausgewählt werden und die ausgewählten Faktoren oder enge Näherungen davon bei den verschiedenen Quantisierungsprozessen verwendet werden, wobei der nicht-degenerierende Satz so ausgelegt ist, daß Rekonetruktionewerte bei einer relativ groben Quantisierung eine Teilmenge dem Rekonstruktionswerte bei einer relativ feinen Quantisierung in einer anderen Generation sind, wodurch in Generationen nach der ersten die Erzeugung von Quantisierungsrauschen reduziert wird, das bei Neuquantisierung von Daten entsteht, die in einer vorhergehenden Generation quantisiert wurden.

10. Ein Verfahren nach Anspruch 8 oder 9, bei dem die Quantisierungsfaktoren Mehrfach-Gruppierungen von Quantisiererwerten entsprechen, wobei entsprechende Quantisiererwerte in aufeinanderfolgenden Gruppierungen eine vorbestimmte numerische Beziehung haben.

11. Ein Verfahren nach Anspruch 10, bei dem die numerische Beziehung in der Größenordnung von drei und der nicht-degenerierende Satz von Quantisierungsfaktoren linear ist.

12. Ein Verfahren nach Anspruch 8 oder 9, bei dem das Datensignal in Form von Transformationskoeffizienten vorliegt, und wobei der nicht-degenerierende Satz von Quantisierungsfaktoren durch den Ausdruck K*(3**n) bestimmt ist, wobei K eine Konstante für irgendeinen Transformationskoeffizienten über den Satz von Quantisierungsfaktoren und n irgendeine positive ganze Zahl einschließlich Null ist.

13. Ein Verfahren nach Anspruch 10, bei dem der nicht-degenerierende Satz von Quantisierungsfaktoren nichtlinear und die numerische Beziehung geringer als drei ist.

14. Ein Verfahren nach Anspruch 10, einschließend: Speichern einer vielzahl von Nachschlagetabellen, die den nicht-degenerierenden Mehrfach-Gruppierungen von Quantisiererwerten entsprechen; und Auswählen einer Nachschlagetabelle, die die Gruppierung vorsieht, um das Datensignal innerhalb der Vorgabe zu komprimieren.

15. Ein Verfahren nach Anspruch 8 oder 9, ferner einschließend: Bereitstellen einer Versuchsgruppierung von Quantisiererwerten; Bestimmen, ob die Versuchsgruppierung von Quantisiererwerten eine Übereinstimmung der Daten mit der Vorgabe vorsieht; Durchführen von irgendwelchen notwendigen Iterationen an den Quantisiererwerten, Identifizieren eines Quantisierungsfaktors aus dem nicht-degenerierenden Satz, der eine ausreichende Komprimierung liefert, um die Übereinstimmung vorzusehen; Auswählen einer Gruppierung von Quantisiererwerten aus dem nicht-degenerierenden Satz, der dem Quantisierungsfaktor entspricht; und Quantisieren des Datensignals in Erwiderung auf die ausgewählte Gruppierung von Quantisiererwerten.

16. Ein Verfahren nach einem der Ansprüche 9 bis 15, bei dem das Datensignal ein Bild darstellt und die Änderung des Datensignals einer Modifikation der Daten innerhalb des Bildes entspricht.

## Revendications

1. Procédé de reproduction d'un signal de données qui représente sous forme numérique une image, le procédé comprenant la production de multiples générations du signal de données, chaque génération incluant une opération de quantification du signal de données, de façon à comprimer les données d'image à l'intérieur d'une limite donnée, et une opération de déquantification et donc de décompression, le procédé comprenant aussi l'altération, entre des générations choisies, de la complexité des données d'image, par le remplacement d'une partie des données d'image, l'image étant soumise à une dégradation en raison de la production de bruit de quantification ; dans lequel au moins certains des facteurs de quantification pour les opérations de quantification procurent davantage de compression que ce qui serait dû à un facteur optimal qui correspondrait au signal de données s'il était comprimé exactement dans ladite limite, et sont choisis et associés pour réduire sensiblement le bruit de quantification produit dans les générations après la première, par rapport au bruit qui serait produit par l'utilisation d'un tel facteur de quantification optimal dans ces générations.

2. Procédé de reproduction d'un signal de données, comprenant la production de multiples générations du signal de données, chaque génération incluant une opération de quantification du signal de données, de façon à comprimer le signal de données à l'intérieur d'une limite donnée, et une opération de déquantification et donc de décompression, le procédé comprenant aussi l'altération, entre des générations choisies, de la complexité du signal de données, par le remplacement d'une partie du signal de données, le signal de données étant soumis à une dégradation en raison de la production de bruit de quantification ; dans lequel le facteur de quantification pour l'opération de quantification dans la première génération est choisi pour donner une surcompression importante du signal de données par rapport à un facteur optimal de quantification qui procurerait une compression juste suffisante pour ajuster le signal de données à l'intérieur de la limite donnée, et dans lequel les facteurs de quantification pour les générations ultérieures sont soit le même que le premier facteur de quantification soit sont modifiés par rapport à celui-ci pour tenir compte d'un changement de complexité du signal de données, la dégradation due à la quantification étant ainsi réduite sensiblement par rapport à celle qui serait produite, dans ces générations, par l'utilisation d'un facteur optimal de quantification.

3. Procédé selon la revendication 2, dans lequel on détermine les facteurs de quantification par les étapes: d'estimation d'un facteur optimal de quantification qui comprime suffisamment le signal de données pour ajuster les données dans un espace de données alloué ; de sélection pour la première génération d'un facteur de surquantification qui est plus grand que ledit facteur optimal de quantification pour surcomprimer sensiblement les données pour que les données ne remplissent pas l'espace de données alloué ; et d'utilisation du même facteur de surquantification plus grand dans des opérations ultérieures de compression pendant les générations successives correspondantes de quantification et de déquantification de données.

4. Procédé selon la revendication 2 ou 3, dans lequel les données représentent une image et la complexité des données d'image est modifiée dans des générations choisies, dans lequel on détermine le facteur de quantification pour la première génération en fonction d'une variation cumulative attendue de la complexité de données d'image, effectuée dans des générations ultérieures.

5. Procédé selon la revendication 3, incluant la délivrance d'un jeu d'essai de valeurs de quantificateur ; la détermination du fait que le jeu d'essai de valeurs de quantificateur fait entrer les données dans la limite ; l'exécution des itérations nécessaires sur les valeurs de quantificateur jusqu'à ce que les données entrent dans la limite ; l'identification dudit facteur de surquantification qui surcomprime sensiblement les données en réponse auxdites itérations ; le choix d'un jeu de valeurs de quantificateur, correspondant aux facteurs de surquantification, qui surcomprime les données d'image ; et la quantification des données en réponse au jeu choisi de valeurs de quantificateur qui surcomprime les données.

6. Procédé selon la revendication 2, incluant les étapes : de transformation des données en coefficients de transformation choisis, avant de comprimer les données ; de changement du facteur de quantification dans l'une des générations ; et d'application d'une séquence de nombres pseudo-aléatoires aux coefficients de transformation choisis qui dépassent un seuil choisi, pour arrondir les coefficients de façon aléatoire.

7. Procédé selon la revendication 6, incluant l'étape de production d'une séquence de nombres pseudo-aléatoires à l'intérieur d'une plage de 0 à 1,0 et avec un spectre d'énergie choisi préalablement, pour utilisation dans l'étape d'application.

8. Procédé selon la revendication 1, dans lequel les facteurs de quantification pour les opérations de quantification sont choisis seulement à partir d'un ensemble non dégénératif fini prédéterminé de facteurs, et dans lequel les facteurs choisis ou leurs approximations rapprochées sont utilisés dans les différentes opérations de quantification, pour réduire ainsi, dans les générations après la première, la production de bruit de quantification provenant de la requantification de données qui ont été quantifiées dans une génération antérieure.

9. Procédé de reproduction d'un signal de données, comprenant la production de multiples générations du signal de données, chaque génération incluant une opération de quantification du signal de données, de façon à comprimer le signal de données à l'intérieur d'une limite donnée, et une opération de déquantification et donc de décompression, le procédé comprenant aussi l'altération, entre des générations choisies, de la complexité du signal de données, par le remplacement d'une partie du signal de données, les données étant soumises à une dégradation en raison de la production de bruit de quantification ; dans lequel les facteurs de quantification pour les opérations de quantification sont choisis seulement à partir d'un ensemble non dégénératif fini prédéterminé de facteurs, et dans lequel les facteurs choisis ou leurs approximations rapprochées sont utilisés dans les différentes opérations de quantification, l'ensemble non dégénératif étant tel que des valeurs de reconstitution dans une quantification relativement grossière sont un sous-ensemble des valeurs de reconstitution dans une quantification relativement fine d'une génération différente, pour réduire ainsi, dans les générations après la première, la production de bruit de quantification provenant de la requantification de données qui ont été quantifiées dans une génération antérieure.

10. Procédé selon la revendication 8 ou 9, dans lequel les facteurs de quantification correspondent à des jeux multiples de valeurs de quantificateur, dans lequel les valeurs de quantificateur correspondantes dans des jeux successifs ont une relation numérique prédéterminée.

11. Procédé selon la revendication 10, dans lequel la relation numérique est de l'ordre de trois et l'ensemble non dégénératif de facteurs de quantification est linéaire.

12. Procédé selon la revendication 8 ou 9, dans lequel le signal de données a la forme de coefficients de transformation, et dans lequel l'ensemble non dégénératif de facteurs de quantification est donné par l'expression K*(3**n), ou K est une constante pour n'importe quel coefficient de transformée dans l'ensemble des facteurs de quantification, et n est un nombre entier positif quelconque y compris zéro.

13. Procédé selon la revendication 10, dans lequel l'ensemble non dégénératif de facteurs de quantification est non linéaire et dans lequel la relation numérique est plus petite que trois.

14. Procédé selon la revendication 10, incluant la mémorisation d'une pluralité de tables de consultation correspondant aux multiples jeux non dégénératifs de valeurs de quantificateur ; et le choix d'une table de consultation qui donne le jeu pour comprimer le signal de données à l'intérieur de la limite.

15. Procédé selon la revendication 8 ou 9, incluant en outre la délivrance d'un jeu d'essai de valeurs de quantificateur ; la détermination du fait que le jeu d'essai de valeurs de quantificateur fait entrer les données dans la limite ; l'exécution des itérations nécessaires sur les valeurs de quantificateur, l'identification d'un facteur de quantification à partir dudit ensemble non dégénératif qui donne une compression suffisante pour réaliser ladite adaptation ; le choix d'un jeu de valeurs de quantificateur à partir dudit ensemble non dégénératif qui correspond audit facteur de quantification ; et la quantification du signal de donnée en réponse au jeu choisi de valeurs de quantificateur.

16. Procédé selon l'une quelconque des revendications 9 à 15, dans lequel le signal de données représente une image et l'altération du signal de données correspond à une modification de donnée à l'intérieur de l'image.
